# EUROPÄISCHE PATENTSCHRIFT

(11) **EP 1 500 321 B1**
(45) Veröffentlichungstag und Bekanntmachung des Hinweises auf die Patenterteilung: **27.12.2006**
(21) Anmeldenummer: 04005809.1
(22) Anmeldetag: 11.03.2004
(51) Int. Cl.: A01B 71/06, A01B 59/06

(54) **Universell einsetzbares Anspannsystem**
Universal coupling device
Dispositif universel pour l'attelage d'une machine

(30) Priorität: 22.07.2003 AT 5172003
(43) Veröffentlichungstag der Anmeldung: 26.01.2005
(73) Patentinhaber: Gangl, Johann, 8162 Passail (AT); Tandl, Gerhard, Ing., 8160 Thannhausen (AT)
(72) Erfinder: Gangl, Johann, 8162 Passail (AT); Tandl, Gerhard, Ing., 8160 Thannhausen (AT)
(74) Vertreter: Nauta, Walther Arnold

(56) Entgegenhaltungen:
- EP-A- 0 568 854
- EP-A- 0 617 882
- EP-A- 0 676 123
- DE-A- 3 140 917
- DE-A- 4 132 889
- FR-A- 2 550 910

## Beschreibung

Die Erfindung betrifft ein universell einsetzbares Anspannsystem, basierend auf einer aus zwei Rahmenteilen (1), (2) bestehenden Anbauvorrichtung, zum An- und Abspannen von Arbeitsgeräten, die zum Heck- und Frontanbau von Zugmaschinen wie, Traktoren, Schlepper etc. geeignet ist.

Eine Kuppelvorrichtung zum Verbinden eines Traktors mit einem Gerät mittels einer Dreipunktanbauvorrichtung ist u. a. in der AT 403 752 B beschrieben.
Der Nachteil der in dieser Druckschrift beschriebenen Vorrichtung liegt darin, dass damit nur eine Verbindung zur Kraftübertragung auf die Zapfwelle des Gerätes hergestellt werden kann, und danach erst die Verbindung der Rahmenteile erfolgt. Weiters ist eine hohe Anfahrgenauigkeit erforderlich.

Aus DE-A-43132889 ist eine Kupplungsvorrichtung bekannt, bestehend aus einer Kupplungseinrichtung einem Rahmenteil an der Zugmaschine und einem Rahmenteil an dem Arbeitsgerät, einer Verriegelungseinrichtung mit kraftbetätigtem Verriegelungsbolzen (35), handelsüblichen Steckverbindungen für Hydraulikanschlüsse einer senkrecht zu den Rahmenteilen verschiebbaren Gelenkwelle die auch die Zapfwelle kuppelt und mittels eines hydraulischen Kurzhubzylinders verschiebbar ist. Der Nachteil dieser Erfindung DE-A-43132889 liegt ebenfalls darin, dass aufgrund der horizontalen Verkuppelung eine hohe Anfahrgenauigkeit erforderlich ist.

Ein Vorteil der vorliegenden Erfindung liegt in dem entwickelten vertikalen Kupplungssystem von Hydraulik, gekennzeichnet durch die Merkmale (6) und (7). Dadurch wird ermöglicht, dass das Zugfahrzeug zum Arbeitsgerät gelenkt wird, sodass die Rahmenteile ineinanderpassen. Das Zusammenwirken der beschriebenen Merkmale ermöglicht, dass der Rahmenteil (1) mit dem Kopfstück (6) positionsgenau in dem Rahmenteil (2) mit dem Kopfgehäuse (7) einkuppelt.

Nach bisherigem Stand DE-A-43132889 werden die hydraulische, pneumatische oder elektrische Leitung in horizontaler Richtung miteinander verbunden, während bei der vorliegenden Erfindung durch die in den Patentansprüchen 1 bis 3 beschriebenen Merkmale eine vertikale Verkupplung ermöglicht wird, die eine höhere Betriebssicherheit als eine horizontale Verkupplung in Steckrichtung aufweisen. Die vorliegende Erfindung ist weiters gegenüber dem bisherigen Stand dadurch gekennzeichnet, dass sowohl die Koppelung der Antriebswellenverbindung, als auch die Verriegelung der Rahmenteile durch den Betätigungszylinder vorgenommen wird, während nach dem bisherigen Stand der Technik die Verriegelung der Rahmenteile getrennt von der Koppelung der Antriebswellenverbindung erfolgt.

Der Nachteil des bisherigen Standes der Technik bestand darin, dass bisher für eine solche Verbindung zu Geräten mit multifunktionaler Ausstattung mit einem hohen Aufwand an verschiedenen Hydraulikverbindungsleitungen und Steckverbindungen hergestellt werden musste, wobei dazu Adaptationen an der Zugmaschine erforderlich waren. Dabei konnte es zum Auftreten von Falschkontakten kommen, weil jede Steckverbindung gesondert manuell hergestellt werden musste. Dabei war es notwendig, dass der Lenker den Führerstand häufig verlassen und sich dabei in den Gefahrenbereich begeben musste.

Der Vorteil der vorliegenden Erfindung liegt hingegen darin, dass eine vollautomatische Kupplung der Rahmenteile einschließlich der Hydraulikverbindungen mit Vor- und Rücklauf und damit ein Anschluss auch an Geräte mit multifunktionaler Ausstattung möglich ist und die Steckverbindungen für Hydraulik bereits komplett in den in der vorliegenden Erfindung beschriebenen Rahmenteilen integriert sind.

Die vorliegende Erfindung ist ferner gekennzeichnet durch einen austauschbaren, verschiebbaren und fixierbaren Zapfwellen-Zentrieraufschubteil (40) mit Gelenkwelle (3), der es ermöglicht, ohne Auswechseln des gesamten Rahmenteils (1) ohne Verschraubung und ohne Auswechseln der Gelenkswelle (3) eine Anpassung an verschiedene Kategorien von Kraftantriebswellen vorzunehmen und damit das Ankuppeln an verschiedene Arbeitsgeräte im Arbeitseinsatz wesentlich zu erleichtern.

Eine Anpassung des Zapfwellen-Zentrieraufschubteils (40) mittels Gelenkwelle (3) auf das Zuggerät wird erreicht, indem die hintere Gelenkwellengabel (41) über ein Lager (44) durch einen Führungsring (47) in das Lagergehäuse (43) des Zapfwellen-Zentrieraufschubteils (40) über die in der vorliegenden Erfindung beschriebene Lagerung zentriert wird und damit auf den Antriebsstummel des Zuggeräts aufschiebbar ist.

Der vorliegenden Erfindung liegt die Aufgabe zugrunde, ein Anspannsystem zu schaffen, welches ein sicheres Verbinden der Rahmenteile, mit gleichzeitiger Koppelung der hydraulischen Anschlüsse, und ein präzises Kuppeln der Zapfwellenverbindung, infolge der Verriegelung der beiden Rahmenteile, zu gewährleisten.
Mit diesem Anspannsystem wird das Anspannen von Arbeitsgeräten vom Führerstand aus ermöglicht, ohne dabei diesen zu verlassen.

Ein weiterer Vorteil liegt darin, dass eine Verletzungsgefahr, durch drehende Anspannteile (rotierende Gelenkwellen, oder das Platzen von hydraulischen Hochdruckleitungen), dadurch nicht mehr gegeben ist, da sich keine Personen beim Anspannen in diesem Gefahrenbereich aufhalten. Durch dieses Anspannsystem ergibt sich auch eine große Zeitersparnis, da keine Zweitpersonen zum Anspannen der Geräte benötigt werden.

Diese gestellte Aufgabe wird erfindungsgemäß durch die in dem gekennzeichneten Teil der Ansprüche genannten Merkmale gelöst.

Die Erfindung wird in den Zeichnungen schematisch dargestellt.
- Figur 1: eine isometrische Ansicht des universell einsetzbaren Anspannsystems vor dem Kuppeln der Anbaudreipunkte von Zugmaschine und Gerät.
- Figur 2: eine Schnittdarstellung des universell einsetzbaren Anspannsystems im gekuppelten Zustand (Schnittebene B).

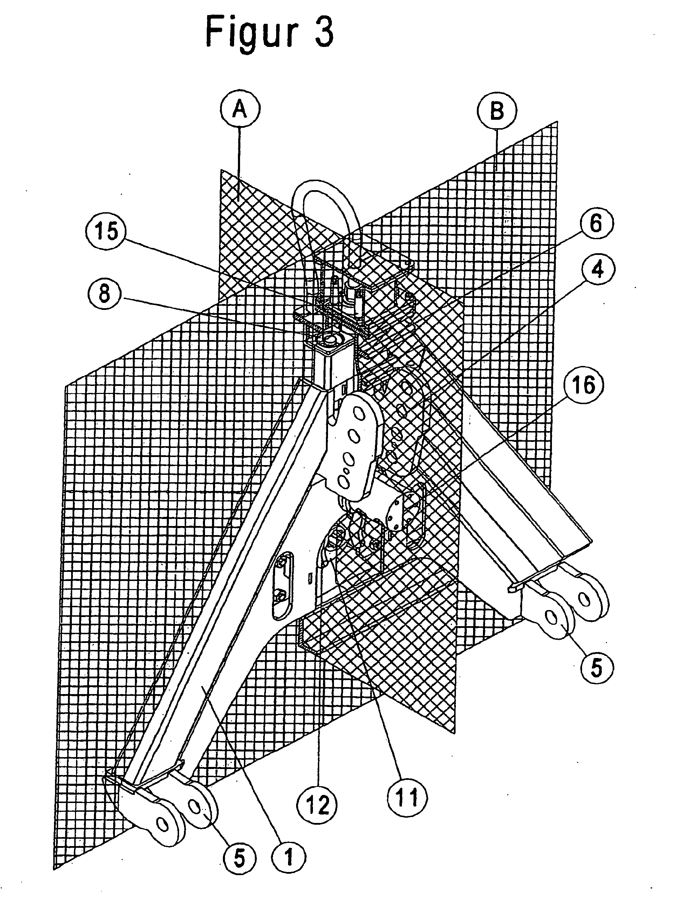

- Figur 3: eine isometrische Ansicht des universell einsetzbaren Anspannsystems im Teilschnitt von der Zugmaschinenseite aus.
- Figur 4: eine isometrische Ansicht des zugmaschinenseitigen Anbaudreipunktes von der Geräteseite aus.

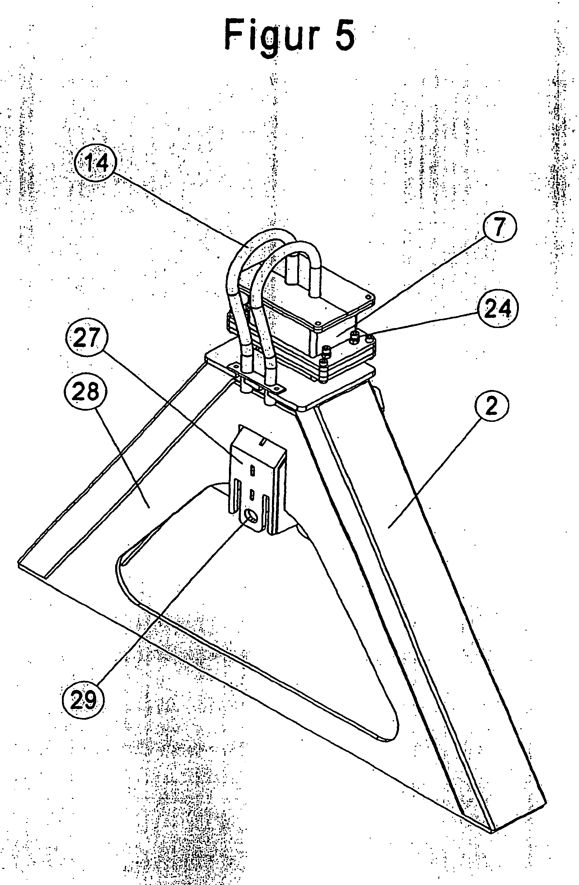

- Figur 5: eine isometrische Ansicht des geräteseitigen Anbaudreipunktes von der Geräteseite aus.
- Figur 6: eine Schnittdarstellung des universell einsetzbaren Anspannsystems im gekuppelten Zustand (Schnittebene A).

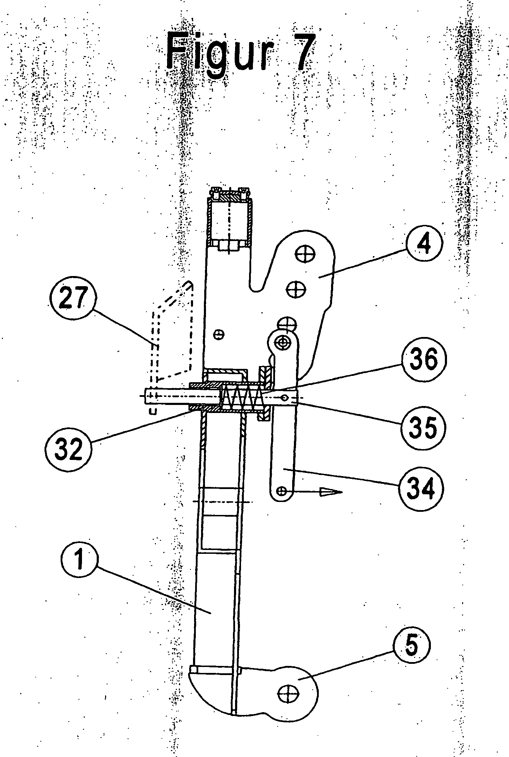

- Figur 7: eine Schnittdarstellung der mechanischen Verriegelung (Schnittebene A)
- Figur 8: eine isometrische Ansicht des verschiebbaren Zapfwellen-Zentrieraufschubes.

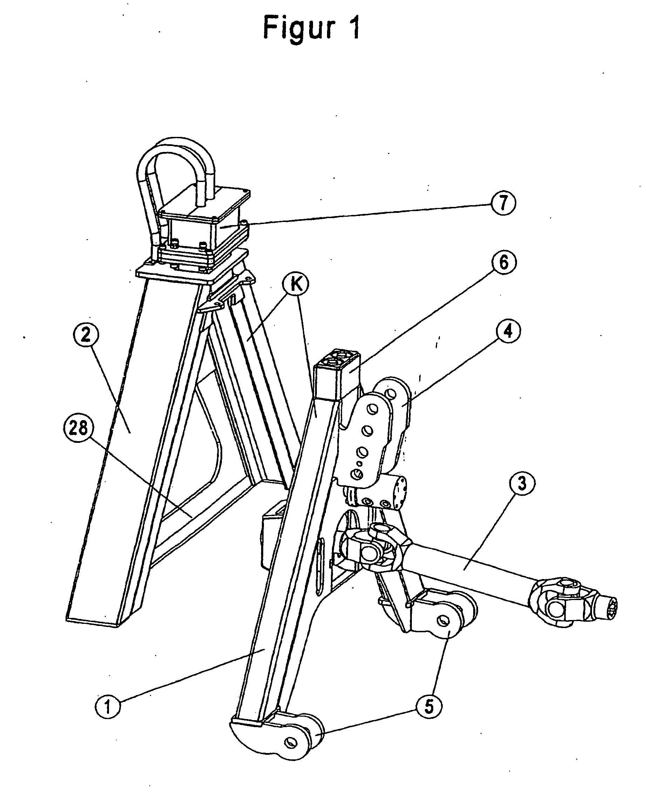

Aus der Figur 1 ist das Anspannsystem in ihrer Zuordnung zur Zugmaschine (Traktor, Schlepper, etc.) in der Anspannbereitschaftsposition ersichtlich. Es ist sowohl keine Zugmaschine (da front- und heckseitig verwendbar) als auch kein Arbeitsgerät (weil universell adaptierbar) dargestellt. Die unteren Anlenkbleche (5) dienen als Aufnahme für die Unterlenker der Zugmaschine und bleiben mit diesen stets verbunden. Die Oberlenkbleche (4) ermöglichen die Verbindung mit einem hydraulisch betätigten Oberlenker der Zugmaschine.

Die Gelenkwelle (3) ist längenveränderlich und auf die Abtriebswelle der Zugmaschine festgelegt und bleibt mit dieser stets verbunden.

Der Rahmenteil (2) ist am Gerät befestigt. Der Rahmenteil (2) kann auch mit Hilfe des universellen Anbaubleches (28) nachträglich an Altgeräten befestigt werden.
Der Rahmenteil (2) ist ebenfalls in der bevorzugten Ausführungsform wie ein umgekehrtes V gestaltet und bildet mit dem zugmaschinenseitigen Rahmenteil (1) eine Kuppeleinheit.

Für das Kuppeln wird der zugmaschinenseitigeRahmenteil (1) in den geräteseitigen Rahmenteil (2) eingeführt und der Unterlenker mittels des hydraulischen zugmaschinenseitigen Kraftantriebs hochgehoben. Beide Rahmenteile (1), (2) können dadurch formschlüssig miteinander verbunden werden.

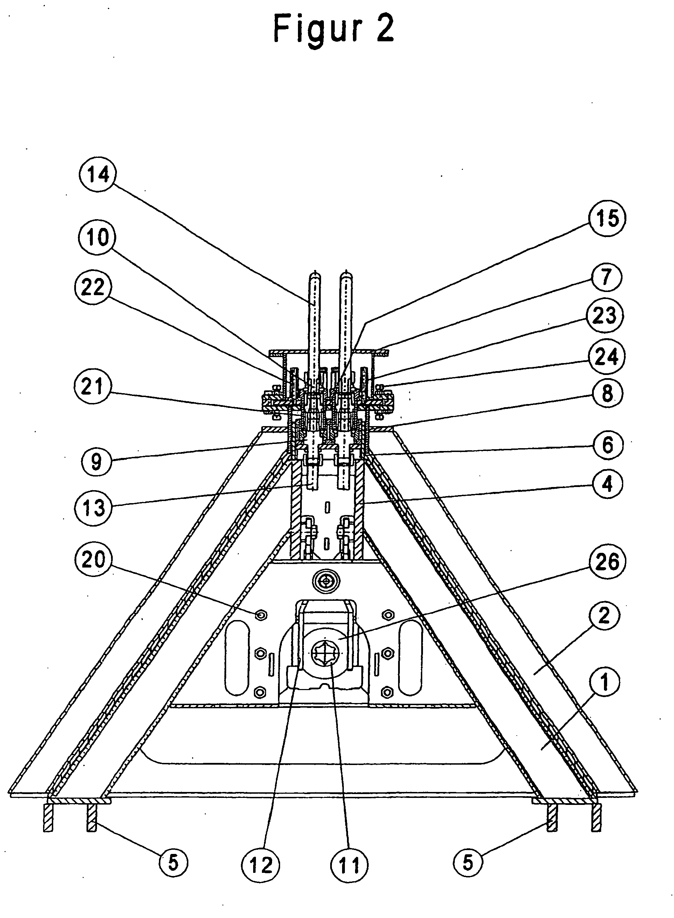

Nachfolgend wird der Kuppelvorgang beschrieben. Figur 2 zeigt die Rahmenteile (1) und (2) in der gekuppelten formschlüssigen Position. Im Kopfteil (6) befinden sich die unteren Zentrierhülsen (8), welche die Innenteile der hydraulischen Anschlüsse (10) aufnehmen und darin befestigt werden. Die hydraulischen Anschlüsse (10) sind mit der Zugmaschine über Hydraulikschläuche (13) verbunden. Im Kopfgehäuse (7) befindet sich eine lose Stahlplatte (15), in der die Außenteile der hydraulischen Anschlüsse (9) in den oberen Zentrierhülsen (21), axial beweglich, positioniert sind. Die oberen Zentrierhülsen (21) sind auf der losen Stahlplatte (15) mittels Stiftschrauben (22) und Druckfedern (23) fixiert. Diese Fixierung der oberen Zentrierhülsen (21) stellt sicher, dass eine zerstörungsfreie Koppelung der hydraulischen Anschlüsse gegeben wird. Beim Hochfahren des Rahmenteils (1) und Einfahren in das Kopfgehäuse (7) zentriert sich der Kopfteil (6) im Rahmenteil (2). Bevor nun die Endposition erreicht wird, werden die Zentrierhülsen (8) und (21) über die lose Stahlplatte (15) ausgerichtet. Die lose Stahlplatte wird gegen die Einstellschrauben (24) gedrückt und die hydraulischen Anschlüsse (9) und (10) werden sicher miteinander verkoppelt. Dadurch wird sichergestellt, dass die hydraulischen Anschlüsse (9) und (10) in ihrer Arbeitsposition sind und ein hydraulischer Druck aufgebaut werden kann. Durch zwei Öldruckleitungen (13), (14) mit Vor- und Rücklauf wird der Aufbau eines hydraulischen Drucks bewirkt.

Nachdem die Formschlüssigkeit der Rahmenteile (1) und (2) hergestellt ist, wird die Kuppeleinheit verriegelt.

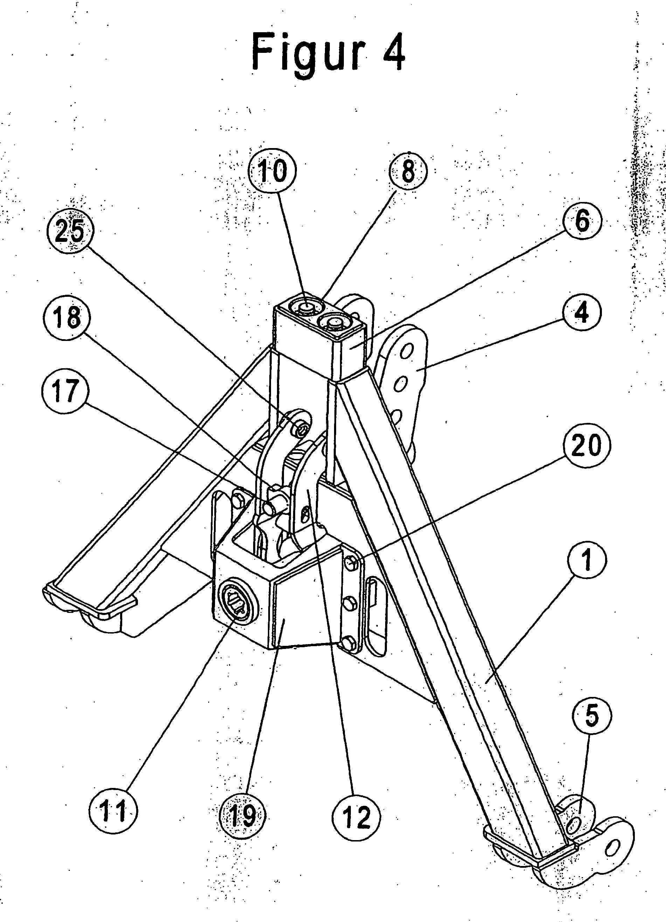

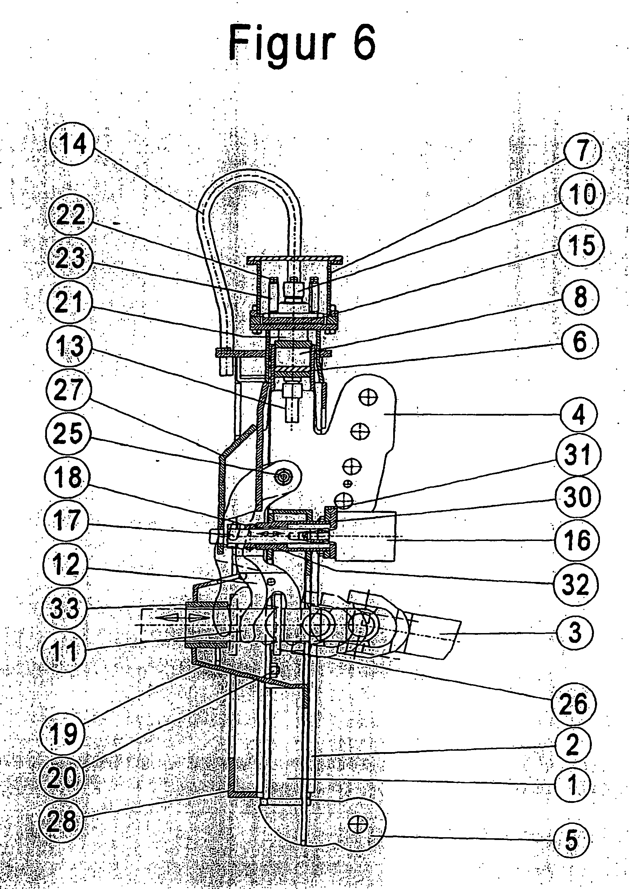

Nachfolgend wird der Aufbau und die Funktionsweise der Verriegelung und der geräteseitigen Zapfwellenverbindung (11) beschrieben. Der Verriegelungsbolzen (17) ist am Kurzhubzylinder (16) befestigt und wird durch Betätigung des Kurzhubzylinders (16) in die Verriegelungsöffnung (29) am Verriegelungselement (27) eingeführt. Der Kurzhubzylinder (16) wird mittels eines Gegenflansches (30) am Aufnahmeflansch (31) der Führungsbuchse (32) fixiert. Es besteht wahlweise in einer bevorzugten Ausführungsform eine Aufrüstbarkeit, sodass eine mechanische Verriegelung möglich wird. Der Verriegelungsbolzen (17) wird in der Führungsbuchse (32) geführt und mit dem Kurzhubzylinder (16) verschraubt. Aus Figur 4 und 6 ist die Funktionsweise der geräteseitigen Zapfwellenverbindung (11) abzuleiten. Beim Verriegeln wird der am Verriegelungsbolzen (17) fixierte Mitnehmerteil (18) mitgeführt und nimmt dadurch die Verschubklauen (12), welche an federnden Aufnahmeelementen (25) drehbar gelagert sind, mit.

Die Verschubklauen (12) verschieben nun die Zapfwellenverbindung, die zur Drehmomentübertragung dient, mittels der Mitnehmerscheibe (26) auf die nicht dargestellte geräteseitige Antriebswelle. Das Zentriergehäuse (19) mit eingeschweißter Führungshülse (33) für die Zapfwellenverbindung (11) ist mit Stahlschrauben (20) am Rahmenteil (1) verschraubt und damit nachrüstbar.

Nachfolgend wird die Funktionsweise der mechanischen Verriegelung beschrieben. Durch Betätigen des Betätigungshebels (34) wird der mechanische Verriegelungsbolzen (35) in seiner Achse verschoben. Die Druckfeder (36) stellt sicher, dass der Verriegelungsbolzen (35) im verriegelten Zustand mit dem Verriegelungselement (27), welches sich am geräteseitigen Rahmenteil (2) befindet, in Position bleibt.

Umgekehrt erfolgt, ausgehend von der verriegelten Position gemäß Figur 6, nach dem Absetzen des nicht dargestellten Arbeitsgerätes, das Entriegeln des Verriegelungsbolzens (17) mittels des Kurzhubzylinders (16), und gleichzeitiger Trennung der Zapfwellenverbindung (11) zur Drehmomentübertragung über die Verschubklauen (12). Nach dem Entriegeln kann nun der zugmaschinenseitige Rahmenteil (1) abgesenkt werden, wobei sich auch die Verkoppelung der beiden hydraulischen Anschlüsse (9) und (10) löst. Nach dem vollständigem Absenken des zugmaschinenseitigen Rahmenteils (1) kann sich die Zugmaschine problemlos vom Gerät entfernen.

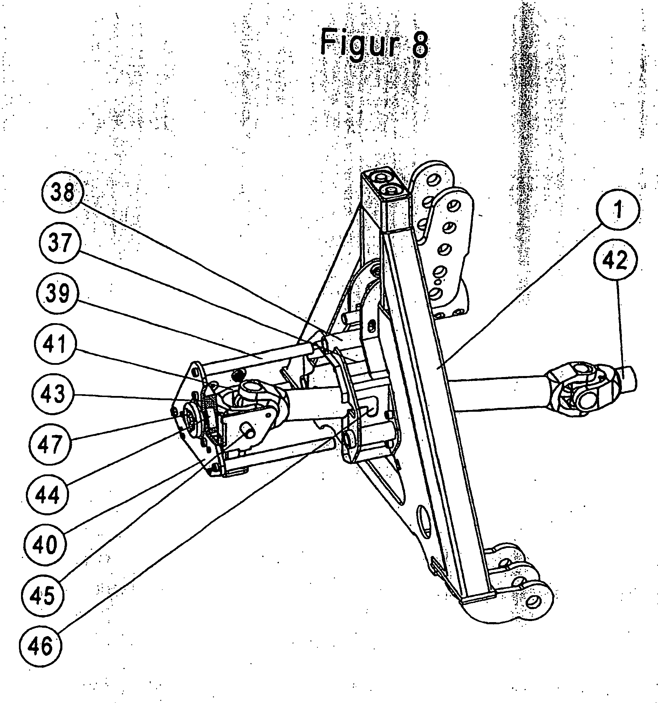

Eine bevorzugte Ausführung des Zentriergehäuses (19), liegt darin, dass das Zentriergehäuse, wie aus der Figur 8 hervorgeht, aus einem Zentriergehäuse-Grundteil (37), der mit Stahlschrauben am Rahmenteil (1) verschraubt ist, und einem Zapfwellen-Zentrieraufschubteil (40) besteht. Dieser Zapfwellen-Zentrieraufschubteil (40) ist mittels der Führungsbolzen (39) über die Führungshülsen (38) am Zentrier-Grundgehäuse (37) horizontal verschiebbar.

Die hintere Gelenkwellengabel (41) einer handelsüblichen Gelenkwelle ist mit der vorderen zugmaschinenseitigen Gelenkwellengabel (42) längenausgleichend zur Kraftübertragung verbunden.

Die hintere Gelenkwellengabel (41), ist je nach Dimension, in das Lagergehäuse (43) des Zapfwellen-Zentrieraufschubteils (40) einsteckbar. Hiezu ist ein Lager (44) auf der hinteren Gelenkwellengabel (41) positioniert. Um ein problemloses Eingreifen der Verzahnungen der hinteren Gelenkwellengabel (41) und der geräteseitig vorhandenen Zapfwelle sicherzustellen, ist der Führungsring (47), mittels Stahlschrauben an der hinteren Gelenkwellengabel montiert.

Für Geräte ohne Zapfwellenantrieb ist der Zapfwellen-Aufschubteil (40) mittels der Ausrückbolzen (45) im Zentriergehäuse-Grundteil (37) in der Ausrücknabe (46) fixierbar. Bei einem eventuellen Gelenkwellenwechsel kann der Zapfwellen-Zentrieraufschubteil (40) samt Gelenkswelle (3) manuell verschoben und abgenommen werden. Diese Merkmale dienen der Funktion, dass das vorliegende universelle Anspannsystem auch für Gerätschaften einsetzbar ist, die über keinen Zapfwellenantrieb verfügen.

Der Vorteil dieser bevorzugten Ausführung dieses Zentriergehäuses (37) liegt darin, dass eine geringere Abwinkelung der Gelenkwelle erfolgt, und damit eine gleichmäßigere Kraftübertragung zu den Geräten erreicht wird, weil durch Ausführung des Zentriergehäuses (37) eine längere Gelenkwelle eingesetzt werden kann.

### Nummernliste

- ( 1. ): Zugmaschinenseitiger Rahmenteil
- ( 2. ): Geräteseitiger Rahmenteil
- ( 3. ): Kraftantriebswelle-Gelenkwelle
- ( 4. ): Dreieckseitiges Anlenkblech für Oberlenker
- ( 5. ): Dreieckseitiges Anlenkblech für Unterlenker
- ( 6. ): Kopfteil-Dreieck
- ( 7. ): Kopfgehäuse-Gegenrahmen
- ( 8. ): Untere Zentrierhülsen
- ( 9. ): Kupplungsdose
- ( 10. ): Kupplungsstecker
- ( 11. ): Zapfwellenverbindung
- ( 12. ): Verschuppklaue
- ( 13. ): Hydraulik-Vorlauf ( offen )
- ( 14. ): Hydraulik-Rücklauf ( geschlossen )
- ( 15. ): Lose Platte
- ( 16. ): Kurzhubzylinder
- ( 17. ): Verriegelungsbolzen
- ( 18. ): Mitnehmerteil
- ( 19. ): Zentriergehäuse
- ( 20. ): Schrauben-Verbindung
- ( 21. ): Obere Zentrierhülsen
- ( 22. ): Stiftschrauben
- ( 23. ): Druckfedern
- ( 24. ): Einstellschrauben
- ( 25. ): Aufnahmeelement
- ( 26. ): Mitnehmerscheibe
- ( 27. ): Verriegelungselement
- ( 28. ): Rahmenblech
- ( 29. ): Verriegelungsöffnung
- ( 30. ): Gegenflansch
- ( 31. ): Aufnahmeflansch
- ( 32. ): Führungsbuchse
- ( 33. ): Führungshülse-Eingeschweißt
- ( 34. ): Betätigungshebel
- ( 35. ): Verriegelungsbolzen
- ( 36. ): Druckfeder
- ( 37. ): Zentriergehäuse-Grundteil
- ( 38. ): Führungshülsen
- ( 39. ): Führungsbolzen
- ( 40. ): Zapfwelle-Zentrieraufschubteil - Komplett
- ( 41. ): Hintere Gelenkwellen Gabel-Geräteseitige Gelenkwellen Gabel
- ( 42. ): Zugmaschinenseitige Gelenkwellen Gabel
- ( 43. ): Lagergehäuse
- ( 44. ): Lager-Geräteseitigen hinteren Gelenkwellen Gabel
- ( 45. ): Ausrückbolzen
- ( 46. ): Ausrücknabe
- ( 47. ): Führungsring

## Patentansprüche

1. Ein universell einsetzbares Anspannsystem bestehend aus einer Kupplungseinrichtung mit einem Rahmenteil an der Zugmaschine und einem Rahmenteil an dem Arbeitsgerät, einer Verriegelungseinrichtung mit kraftbetätigtem Verriegelungsbolzen, einer Steckverbindung für Hydraulikanschlüsse, einer senkrecht zu den Rahmenteilen verschiebbaren Gelenkwelle, die mittels eines hydraulischen Betätigungszylinders verschiebbar ist, **dadurch gekennzeichnet, dass** das zugmaschinenseitige Rahmenteil (1) ein Kopfteil (6) mit festen Zentrierhülsen (8) und das geräteseitige Rahmenteil (2) ein Kopfgehäuse auf einer losen Platte (15) mit axial beweglichen Zentrierhülsen (21) aufweist zur Zentrierung und vertikalen Koppelung der hydraulischen Anschlüsse (13), (14) beim Hochheben des zugmaschinenseitigen Rahmenteils (1), sowie einen Betätigungszylinder (16) zur gleichzeitigen horizontalen Koppelung der Antriebswellenverbindung und Verriegelung der Rahmenteile (1), (2), wobei durch den Betätigungszylinder (16) ein Verriegelungsbolzen (17) betätigbar ist, so dass der Verriegelungsbolzen (17) in ein Verriegelungselement (27) eingeführt wird und ein am Verriegelungsbolzen (17) fixiertes Mitnehmerteil (18) mittels Verschubklauen (12) und Mitnehmerscheibe (26) die Koppelung der Antriebswellenverbindung durchführt.

2. Anspannsystem nach Patentanspruch 1, **dadurch gekennzeichnet, dass** das Kopfteil (6) untere Zentrierhülsen (8) und Innenteile (10) aufweist und das Kopfgehäuse (7) obere Zentrierhülsen (21) und Außenteile (9) aufweist.

3. Anspannsystem nach Patentanspruch 2, **dadurch gekennzeichnet, dass** die Außenteile (9) in den oberen Zentrierhülsen (21) mittels Stiftschrauben (22) und Druckfedern (23) axial beweglich auf einer losen Platte (15) fixierbar sind.

4. Anspannsystem nach Patentanspruch 1, **dadurch gekennzeichnet, dass** ein Zentriergehäuse (19) mit Führungshülse (38) für die Zapfwellenverbindung (11) mittels einer Schraubenverbindung (20) am zugmaschinenseitigen Rahmenteil (1) nachrüstbar ist.

5. Anspannsystem nach Patentanspruch 1, **dadurch gekennzeichnet, dass** auch eine rein mechanische Verriegelung mittels des Verriegelungsbolzens (35), einer Druckfeder (36) und eines Betätigungshebels (34) möglich ist.

6. Anspannsystem nach Patentanspruch 4, **dadurch gekennzeichnet, dass** das Zentriergehäuse (19) aus einem Zentriergehäuse-Grundteil (37) und einem Zapfwellen-Zentrieraufschubteil (40) besteht, wobei der Zapfwellen-Zentrieraufschubteil (40) mittels Führungsbolzen (39) über die Führungshülsen (38) am Zentriergehäuse-Grundteil (37) horizontal verschiebbar, ausrückbar, manuell auswechselbar und fixierbar ist.

7. Anspannsystem nach Patentanspruch 1, 2, 3 und 6, **dadurch gekennzeichnet**, das die hintere Gelenkwellengabel (41), an welcher der Führungsring (47) montiert ist, über ein Lager (44) in das Lagergehäuse (43) des Zapfwellen-Zentrieraufschubteil (40) einsteckbar ist.

## Claims

1. A universally applicable coupling system consisting of a coupling device with one frame component on the tractor and another frame component on the machinery, a locking device with power-actuated locking pin, a plug connection for hydraulic connections, a Cardan shaft that can be moved vertically to the frame components using a hydraulic actuating cylinder, **characterised by** the fact that the frame component (1) on the tractor has a headstock (6) with fixed centering sleeves (8) and that the frame component (2) on the machinery has a headstock casing on a loose plate (15) with axially moveable centering sleeves (21) for the centering and vertical coupling of the hydraulic connections (13), (14) while the frame component (1) of the tractor is lifted; furthermore, an actuating cylinder (16) for simultaneous horizontal coupling of the driveshaft connection and the interlocking of the frame components (1), (2), whereby the actuating cylinder (16) operates a locking pin (17), inserting the locking pin (17) into a locking element (27), while a flight (18) attached to the locking pin (17) establishes the driveshaft coupling using displacement claws (12) and a driving plate (26).

2. Coupling system in accordance with patent claim 1, **characterised by** the fact that the headstock (6) contains lower centering sleeves (8) and inner parts (10), and that the headstock casing (7) contains upper centering sleeves (21) and outer parts (9).

3. Coupling system in accordance with patent claim 2, **characterised by** the fact that the outer parts (9) in the upper centering sleeves (21) can be fixed on a loose plate (15) using studs (22) and compression springs (23) in such a way as to be axially moveable.

4. Coupling system in accordance with patent claim 1, **characterised by** the fact that a centering casing (19) with guide sleeve (38) for the power take-off connection (11) can be retrofitted due to a bolted joint (20) on the frame component (1) on the tractor.

5. Coupling system in accordance with patent claim 1, **characterised by** the fact that even purely mechanical locking is possible, using the locking pin (35), a compression spring (36) and an actuating lever (34).

6. Coupling system in accordance with patent claim 4, **characterised by** the fact that the centering casing (19) consists of a basic centering casing component (37) and a power take-off centering slip-on yoke (40). The power take-off centering slip-on yoke (40) can be moved horizontally, disengaged, replaced manually and fixed in position on the basic centering casing component (37) using guide pins (39), and via the guide sleeves (38).

7. Coupling system in accordance with patent claim 1, 2, 3 and 6, **characterised by** the fact that the rear Cardan shaft fork (41), onto which the guide ring (47) is mounted, can be inserted into the bearing casing (43) of the power take-off centering slip-on yoke (40) via a bearing (44).

## Revendications

1. Un système d'attelage universel composé d'un dispositif d'accouplement avec une pièce de châssis fixée à l'unité tractrice et une pièce de châssis fixée à l'instrument de travail, une broche de rallonge actionnant un dispositif de verrouillage, un raccord à fiche pour les raccordements hydrauliques, un arbre à cardans coulissant verticalement jusqu'aux pièces de châssis, qui coulisse grâce à un vérin d'actionnement hydraulique et qui se **caractérise par le fait que** la pièce de châssis de l'unité tractrice (1) a une traverse d'attelage (6) avec de solides tubes de guidage (8) et la pièce de châssis de l'instrument de travail (2), un carter-chapeau sur une plaque amovible (15) avec des tubes de guidage en rotation autour d'un axe (21) pour le guidage et le couplage vertical des raccordements hydrauliques (13), (14) en soulevant la pièce de châssis de l'unité tractrice (1) ainsi qu'un vérin d'actionnement (16) pour l'accouplement simultané et horizontal de la liaison de l'arbre de transmission et du verrouillage des pièces de châssis (1) et (2) de telle manière que grâce au vérin d'actionnement, une broche de rallonge (17) est actionnée et que la broche de rallonge (17) est introduite dans un élément de verrouillage (27) et un élément menant (18) fixé à la broche de rallonge (17) permet l'accouplement de la liaison de l'arbre de transmission grâce aux pinces d'insertion (12) et à la rondelle d'entraînement (26).

2. Le Système d'attelage se caractérise dans la revendication 1 par le fait que la traverse d'attelage (6) comporte des tubes de guidage inférieurs (8) et des pièces internes (10) et que le carter-chapeau (7) comporte des tubes de guidage supérieurs (21) et des parties externes (9).

3. Le Système d'attelage se caractérise dans la revendication 2 par le fait que les parties externes (9) sont fixables dans les tubes de guidage supérieurs (21) au moyen de goujons (22) et de ressorts à pression (23) en pivotant sur une plaque amovible (15).

4. Le Système d'attelage se caractérise dans la revendication 1 par le fait qu'un carter de guidage (19) peut être fixé avec des tubes de guidage (38) pour la liaison de la prise de force au moyen d'une liaison mécanique par vissage (20) sur la pièce de châssis de l'unité tractrice (1).

5. Le Système d'attelage se caractérise dans la revendication 1 par le fait qu'un simple verrouillage mécanique est possible au moyen de la broche de rallonge (35), d'un ressort à pression (36) et d'un levier d'actionnement (34).

6. Le Système d'attelage se caractérise dans la revendication 4 par le fait que le carter de guidage (19) est composé d'une partie principale (37) et d'une pièce d'insertion et de guidage (40) de telle manière que cette pièce d'insertion et de guidage (40) de la prise de force (40) peut être insérée et extraite horizontalement ou fixée et changée manuellement grâce aux boulons-guides (39) par l'intermédiaire des tubes de guidage (38) de la partie principale du carter de guidage (37).

7. Le Système d'attelage se caractérise dans la revendication 1, 2,3 et 6 par le fait que la fourche arrière de l'arbre à cardans (41) sur laquelle le collier de guidage est monté (47), est insérable par le palier (44) dans le carter-chapeau (43) de la pièce d'insertion et de guidage (40).
